# EUROPEAN PATENT APPLICATION

(11) **EP 1 326 462 A2**
(43) Date of publication of application: **09.07.2003**
(21) Application number: 02029069.8
(22) Date of filing: 30.12.2002
(51) Int. Cl.: H04Q 7/38

(54) **Apparatus and method for initiating a broadcast service by a mobile station in a mobile communication system**

(30) Priority: 29.12.2001 KR 2001088413
(71) Applicant: SAMSUNG ELECTRONICS CO., LTD., Suwon-City, Kyungki-do (KR)
(72) Inventor: Kim, Dae-Gyun, Paldal-gu, Suwon-city, Kyungki-do (KR); Chang, Yong, Paldal-gu, Suwon-city, Kyungki-do (KR)
(74) Representative: Grünecker, Kinkeldey, Stockmair & Schwanhäusser Anwaltssozietät

(57) **Abstract**

An apparatus and method for initiating a broadcast service in a mobile communication system supporting the broadcast service. During a broadcast service from a service base station, a mobile station receives configuration information for neighbor base stations from the service base station. The configuration information indicates whether a handoff from the service base station to the neighbor base stations is possible and whether the neighbor base stations are providing the broadcast service. During a hand off to a new base station, if the new base station is a neighbor base station of the service base station and the new base station is not providing the broadcast service, the mobile station requests the new base station to initiate the broadcast service. If there is a base station not providing the broadcast service among the neighbor base stations, the mobile station requests the service base station to initiate the broadcast service of the neighbor base stations. The service base station then requests the neighbor base stations to initiate the broadcast service.

## Description

This application claims priority to an application entitled "Apparatus and Method for Initiating Broadcast Service by Mobile Station in a Mobile Communication System" filed in the Korean Industrial Property Office on December 29, 2001 and assigned Serial No. 2001-88413, the contents of which are incorporated herein by reference.

### BACKGROUND OF THE INVENTION

### 1. Field of the Invention

The present invention relates generally to a broadcast service apparatus and method for a mobile communication system, and in particular, to an apparatus and method for initiating a broadcast service by a mobile station.

### 2. Description of the Related Art

A communication environment, such as IMT-2000 (International Mobile Telecommunication-2000), has an ability to provide not only image and voice information, but also various information required by a user, in real-time and synthetically. In addition, a mobile communication system has evolved from a conventional system wherein a mobile station (MS), such as a cellular phone or a PCS (Personal Communications System) phone, simply performs only voice communication into an improved system wherein a user is able to transmit character information and also enjoy a wireless broadcast service using a mobile station.

The current 3GPP2 (3^{rd} Generation Partnership Project 2) considers a broadcast service in order to secure efficient resource utilization and provide various service media in a mobile communication system for high-speed data transmission. Commonly, a broadcast service is performed in such a manner that a mobile station receives high-speed forward data without transmitting reverse feedback information. This is conceptually similar to a conventional television broadcast service.

A common channel, if it is designed to guarantee the same performance even at a cell boundary, consumes excessive cell capacity. In order to solve this problem, a structure of a supplemental channel, an existing dedicated channel proposed for a packet data service, is partially modified to realize high-speed transmission. The supplemental channel is used for a broadcast service, using a common long code mask instead of a dedicated long code mask uniquely assigned to a particular user. In addition, by supporting outer coding and an autonomous handoff wherein feedback information from a mobile station is not required during a broadcast service, the supplemental channel secures a performance higher than or equal to the performance of the existing common channel. Further, by excluding reverse transmission of power control information and feedback information, the common channel removes a function of a dedicated reverse channel, thereby preventing a waste of reverse cell capacity. As a result, a cell can theoretically accommodate an infinite number of mobile stations. In this manner, it is possible to reduce power consumption, while guaranteeing prescribed performance.

A mobile station receives overhead information for a broadcast service through a first tuned frequency channel. Table 1 illustrates a format of a broadcast service parameter message (BSPM) for carrying overhead information for the broadcast service.

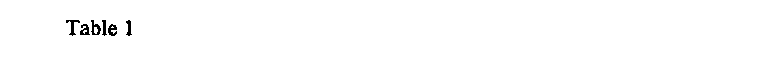

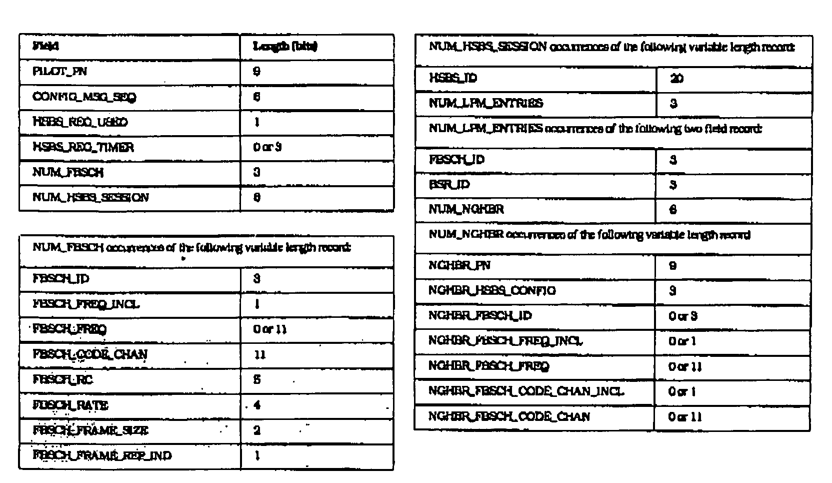

With reference to Table 1, a description will be made of major fields of the BSPM. An FBSCH_FREQ (Forward Broadcast Supplemental Channel Frequency) field designates a frequency for the broadcast service, and a mobile station determines a frequency separately designated for the broadcast service based on the FBSCH_FREQ field and transitions (switches) to the determined frequency. An FBSCH_CODE_CHAN field indicates code information of a physical channel, and an FBSCH_RATE field indicates a data rate of a corresponding channel. An HSBS_ID (High Speed Broadcast Service Index) represents information for identifying a service type between the mobile station and a broadcast service server, and an FBSCH_ID field represents an index of a physical channel. Further, a BSR_ID (Broadcast Service Reference Index) represents a logical index classified by services. Here, the mobile station can determine mapping relationship between logical information and a physical channel based on a combination of the HSBS ID field, the FBSCH_ID field and the BSR_ID field. That is, the mobile station can determine a type of a broadcast service provided by the corresponding physical channel based on the above-stated information.

Particularly, in Table 1, NGHBR (Neighbor)-related information fields include neighbor configuration information for neighbor base stations (i.e., neighbor cells). The neighbor configuration information includes code information (NGHBR_PN, NGHBR_FBSCH_CODE_CHAN, and NGHBR_FBSCH_CODE_CHAN_INCL), and frequency information (NGHBR_FBSCH_FREQ, and NGHBR_FBSCH_FREQ_INCL) used for FBSCH of neighbor cells based on the number NUM_NEHBR of neighbor cells. When the neighbor configuration information for the neighbor base stations is provided to a mobile station, the mobile station performs an autonomous handoff based on the provided neighbor configuration information, and combines signals from the corresponding neighbor base stations, thereby increasing reception performance.

As described above, in the existing broadcast service, base stations in a prescribed set simultaneously transmit broadcast service streams without using feedback information from a mobile station, causing a waste of wire/wireless resources by the base stations. Accordingly, there are demands for a method of selectively allowing the base stations to transmit a broadcast service stream. In addition, when the mobile station is handed off to a base station that is not currently providing a broadcast service, the mobile station is required to transmit a broadcast service start request to the corresponding base station.

### SUMMARY OF THE INVENTION

It is, therefore, an object of the present invention to provide an apparatus and method for minimizing a waste of wire/wireless resources caused by a base station by independently controlling transmission of a broadcast service data stream by base stations based on feedback information from a mobile station.

To achieve the above and other objects, the present invention provides a method for requesting a neighbor base station of a service base station to initiate a broadcast service by a mobile station during the broadcast service from the service base station in a mobile communication system supporting the broadcast service. The method comprises receiving configuration information for the neighbor base station from the service base station, the configuration information indicating whether a handoff from the service base station to the neighbor base station is possible and whether the neighbor base station is providing the broadcast service; and requesting the neighbor base station to initiate the broadcast service based on the configuration information after the handoff to the neighbor base station.

Also, the present invention provides a method for initiating a broadcast service at a request of a mobile station by a base station not providing the broadcast service in a mobile communication system supporting the broadcast service. The method comprises receiving a message for requesting initiation of the broadcast service from the mobile station that has entered a service area of the base station due to a handoff; opening a session for providing the broadcast service and assigning a physical channel in response to the request; and broadcasting broadcast data for the broadcast service over the assigned physical channel.

Further, the present invention provides a method for requesting neighbor base stations of a service base station to initiate a broadcast service by a mobile station during the broadcast service from the service base station in a mobile communication system supporting the broadcast service. The method comprises receiving configuration information for the neighbor base stations from the service base station, the configuration information indicating whether a handoff from the service base station to the neighbor base stations is possible and whether the neighbor base stations are providing the broadcast service; determining whether there is a base station that is not providing the broadcast service among the neighbor base stations, based on the configuration information; and if there is a base station that is not providing the broadcast service among the neighbor base stations, requesting the service base station to initiate the broadcast service of the neighbor base stations.

Additionally, the present invention provides a method for requesting neighbor base stations to initiate a broadcast service at a request of a mobile station by a service base station providing the broadcast service in a mobile communication system supporting the broadcast service. The method comprises receiving from the mobile. station a message for requesting the neighbor base stations to initiate the broadcast service; requesting the neighbor base stations to open a session for the broadcast service in response to the request; and receiving a response to the session open request from the neighbor base stations.

Furthermore, the present invention provides a method for initiating a broadcast service at a request of a service base station providing the broadcast service to a mobile station by a base station not providing the broadcast service in a mobile communication system supporting the broadcast service. The method comprises receiving a message for requesting opening of a session for the broadcast service from the service base station; in response to the request, opening a session for providing the broadcast service, assigning a physical channel, and transmitting a response to the message to the service base station; and broadcasting broadcast data for the broadcast service over the assigned physical channel.

### BRIEF DESCRIPTION OF THE DRAWINGS

The above and other objects, features, and advantages of the present invention will become more apparent from the following detailed description when taken in conjunction with the accompanying drawings in which:
FIG. 1 illustrates a network configuration supporting a high-speed broadcast service according to an embodiment of the present invention; FIG. 2 illustrates a procedure for initiating by a new BSC a broadcast service based on feedback information from a mobile station in a mobile communication system supporting a high-speed broadcast service according to an embodiment of the present invention;
FIG. 3 illustrates a procedure for initiating a broadcast service by a new BTS based on feedback information from a mobile station in a mobile communication system supporting a high-speed broadcast service according to an embodiment of the present invention;
FIG. 4a is a flowchart illustrating a procedure for attempting broadcast service registration to a new BTS during an idle handoff by a mobile station upon receiving neighbor configuration information for a high-speed broadcast service according to an embodiment of the present invention;
FIG. 4b is a flowchart illustrating a procedure for performing by BTS broadcast service registration attempted by a mobile station according to an embodiment of the present invention;
FIG. 5a illustrates a mobile station apparatus according to an embodiment of the present invention;
FIG. 5b illustrates a BTS apparatus according to an embodiment of the present invention;
FIG. 6 illustrates a procedure for initiating a broadcast service by a neighbor BSC based on feedback information from a mobile station in a mobile communication system supporting a high-speed broadcast service according to an embodiment of the present invention;
FIG. 7 illustrates a procedure for initiating a broadcast service by a neighbor BTS based on feedback information from a mobile station in a mobile communication system supporting a high-speed broadcast service according to an embodiment of the present invention;
FIG. 8a is a flowchart illustrating a procedure for attempting HSBS registration to a neighbor BTS by a mobile station upon receiving neighbor configuration information for a high-speed broadcast service according to another embodiment of the present invention;
FIG. 8b is a flowchart illustrating a procedure for processing by a neighbor BTS the HSBS registration attempted by the mobile station according to another embodiment of the present invention; and
FIG. 8c is a flowchart illustrating a procedure for initiating a broadcast service by a neighbor BTS upon receiving a session open request from a service BTS according to another embodiment of the present invention.

### DETAILED DESCRIPTION OF THE PREFERRED EMBODIMENT

Preferred embodiments of the present invention will be described herein below with reference to the accompanying drawings. In the following description, well-known functions or constructions are not described in detail since they would obscure the invention in unnecessary detail.

The present invention provides a method for analyzing, by a mobile station, configuration information of neighbor base stations for a high speed broadcast service (HSBS), and if a particular neighbor base station does not assign a transmission channel for a broadcast service, registering a broadcast service so that the neighbor base station can initiate the broadcast service. The present invention transmits to the mobile station the configuration information for neighbor base stations of a certain base station that transmits BSPM (Broadcast Service Parameter Message)using an NGHBR_HSBS_CONFIG field of the BSPM. Table 2 illustrates neighbor configuration information defined in the present invention and 3-bit values recorded in the NGHBR_HSBS_CONFIG field of the BSPM.

**Table 2**

| **NGHBR_HSBS_CONFIG** | **Neighbor F-BSCH Configuration** |
|---|---|
| 000 | The neighbor base station configuration with respect to this HSBS session is not known. |
| 001 | The neighbor base station is not transmitting this HSBS session. |
| 010 | The neighbor base station is transmitting this HSBS session. |
| | Autonomous soft-handoff of the F-BSCH carrying this HSBS session is not possible with this neighbor base station. |
| 011 | The neighbor base station is transmitting this HSBS session. Autonomous soft-handoff of the F-BSCH carrying this HSBS session is possible with this neighbor base station. |
| 100 | The neighbor base station is not transmitting this HSBS session. Autonomous soft-handoff of the F-BSCH carrying this HSBS session is possible with this neighbor base station. |
| 101 | The neighbor base station is not transmitting this HSBS session. Assignment of the F-BSCH carrying this HSBS session is possible with this neighbor base station. |

In Table 2, the present invention uses the values '100' and '101'. When a mobile station performs an idle handoff to a neighbor base station with NGHBR_HSBS_CONFIG set to '100' or '101', the mobile station registers a broadcast service to the neighbor base station. The NGHBR_HSBS_CONFIG of '100' indicates that although a mobile station that is provided with a broadcast service in an area of a current service base station can enter an area of a corresponding neighbor base station due to a handoff, the corresponding neighbor base station is not currently providing the broadcast service. The NGHBR_HSBS_CONFIG of '101' indicates that a mobile station that is provided with a broadcast service in an area of a current service base station can enter an area of a corresponding neighbor base station due to a handoff, and the corresponding neighbor base station is prepared to provide the corresponding broadcast service.

That is, the term "neighbor configuration information" as used herein refers to information indicating whether a handoff to a corresponding neighbor base station is possible and whether the corresponding base station is currently providing a broadcast service.

The values '100' and '101' of the NGHBR_HSBS_CONFIG can be differently used according to session connection configuration of a broadcast service system. Herein, "open/close" of a broadcast session indicates in a wire section whether a logical/physical resource for a broadcast service is assigned or not, and indicates in a wireless section whether a physical code channel for a broadcast service is set up or not.

A base station is comprised of one base station controller (BSC) and a plurality of base transceiver subsystems (BTSs). If a session for a particular broadcast service can be separately opened or closed for BTSs, then NGHBR_HSBS_CONFIG of '100' and NGHBR_HSBS_CONFIG of '101' are both available. That is, '100' indicates that although a broadcast service can be provided and a handoff to the corresponding BTS is possible, the corresponding BTS is not currently providing a broadcast service, and '101' indicates that although a broadcast service can be provided, an autonomous soft handoff to a corresponding BTS is impossible. When BTSs in a prescribed set, to which an autonomous handoff is possible, are designed to be able to simultaneously open/close a broadcast service session, only the NGHBR_HSBS_CONFIG of '101' is available. This is because '100' is not generated, as all BTSs, to which an autonomous handoff is possible, simultaneously initiate the broadcast service.

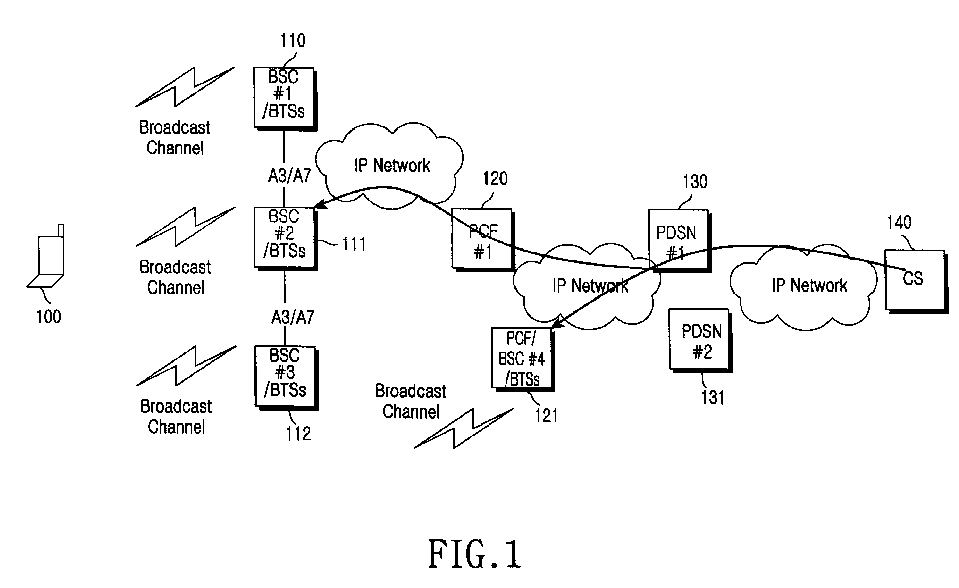

FIG. 1 illustrates a network configuration supporting a high-speed broadcast service according to an embodiment of the present invention. Referring to FIG. 1, a contents server (CS) 140 provides image and voice data for a broadcast service, i.e., broadcast data, in the form of an IP (Internet Protocol) packet compressed according to an Internet protocol. The broadcast data is broadcast to packet control function (PCF) blocks 120 and 121 via packet data service nodes (PDSNs) 130 through an IP-based packet communication network such as the Internet. The PCF blocks 120 and 121 transmit the broadcast data to their associated anchor BSCs.

In FIG. 1, for example, the PCF block 120 transmits the broadcast data to an anchor BSC 111. The anchor BSC 111 then transmits the broadcast data to other BSCs 110 and 112, through an interface called A3/A7, formed between the BSCs. The broadcast data received at the BSCs 110, 111, and 112 is broadcast over broadcast channels through the BTSs associated with the BSCs. In FIG. 1, the BSCs and their associated BTSs are represented with the same blocks for convenience, and the configuration information according to the present invention indicates whether a handoff to the BTSs is possible and whether the BTSs are currently providing a broadcast service. As a result, a mobile station (MS) 100 that is provided with the broadcast service in service areas of the BTSs receives the broadcast data. For example, bold solid arrows in Fig. 1 represent a flow of broadcast data from CS 140 to BSCs 111,121 through PDSN 130.

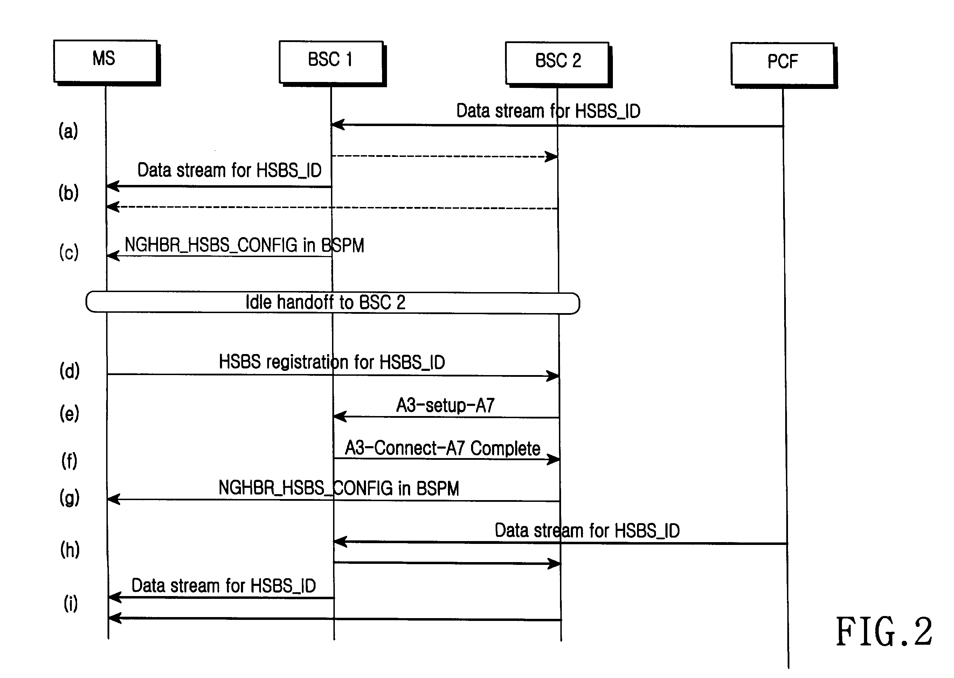

FIG. 2 illustrates a procedure for initiating by a new BSC a broadcast service based on feedback information from a mobile station in a mobile communication system supporting a high-speed broadcast service according to an embodiment of the present invention. With reference to FIG. 2, a procedure for first receiving in the mobile station a broadcast service from the new BSC will be described. In addition, FIG. 2 illustrates an operation of simultaneously opening/closing a session for a broadcast service by BTSs in a prescribed set, to which an handoff is possible. Here, the BTSs controlled by one BSC are included in the same set. Although a description of the present invention will be made with reference to where BSC1 serves as an anchor BSC, the invention can be applied to other cases as well.

Referring to FIG. 2, in step (a), a PCF(Packet Control Function) transmits broadcast data received from its upper PSDN to the BSC1, an anchor BSC and the BSC1 attempts to transmit the broadcast data to another BSC(i.e., BSC2). However, the BSC2 cannot receive the broadcast data, since a session of a broadcast service is not opened. In step (b), the BSC1 broadcasts the broadcast data received from the PCF through its lower BTSs. The BSC2 cannot even broadcast the broadcast data, since the BSC2 couldn't receive the broadcast data in the step (a). In FIG. 2, a dotted line means that corresponding transmission cannot be performed.

In step (c), in order to transmit overhead information necessary for a broadcast service, the BSC1 transmits an overhead message BSPM to a mobile station (MS) currently receiving a broadcast service in a corresponding service area over a paging channel by its lower BTSs. Here, unlike a thick solid line representing transmission of broadcast data, a thin solid line indicates transmission of the BSPM over a paging channel, a control channel. As mentioned above, the BSPM includes configuration information for neighbor BTSs in the NGHBR_HSBS_CONFIG field along with parameters necessary for the broadcast service. If it is possible to initiate a broadcast service even though there is no mobile station currently receiving a broadcast service in a service area of a corresponding neighbor BTS, then NGHBR_HSBS_CONFIG of the corresponding neighbor BTS is set to '100' or '101'. As stated above, '100' indicates that although a broadcast service can be provided and a handoff is possible, the broadcast service is not currently provided, and '101' indicates that although the broadcast service can be provided, an handoff is impossible.

If an idle handoff to the BSC2 occurs as the mobile station in an idle state moves toward a service area of the BTS under control of the BSC2, then the mobile station desires to receive a broadcast service even from the BSC2. Therefore, in step (d), the mobile station performs broadcast service registration on the BSC2 by transmitting an HSBS registration message with an HSBS_ID, an index indicating a desired broadcast service, to the BSC2. This is because the mobile station has determined, based on the received BSPM, that although the BTS under control of the BSC2 does not currently provide a broadcast service, the BTS can initiate the broadcast service, i.e., has determined that NGHBR_HSBS_CONFIG is set to ' 100' or '101'.

In step (e), upon receiving the HSBS registration message from the mobile station, the BSC2 transmits to the BSC1 an A3-Setup-A7 message for setting up connection to the BSC1. In step (f), the BSC1 transmits an A3-Connect-A7 Complete message to the BSC2 in response to the A3-Setup-A7 message. In step (g), upon receiving session information for a broadcast service from the BSC1 through the connection, the BSC2 opens a broadcast service session by checking its wire/wireless resources and transmits a new BSPM to the mobile station by its lower BTSs.

In step (h), the BSC1 transmits the broadcast data received from the PCF to the BSC2. In step (i), the BSC2 provides the broadcast service through its lower BTSs in the same manner as done by the BSC1. In this way, the mobile station can be provided with the broadcast service even in a service area of the new BSC2.

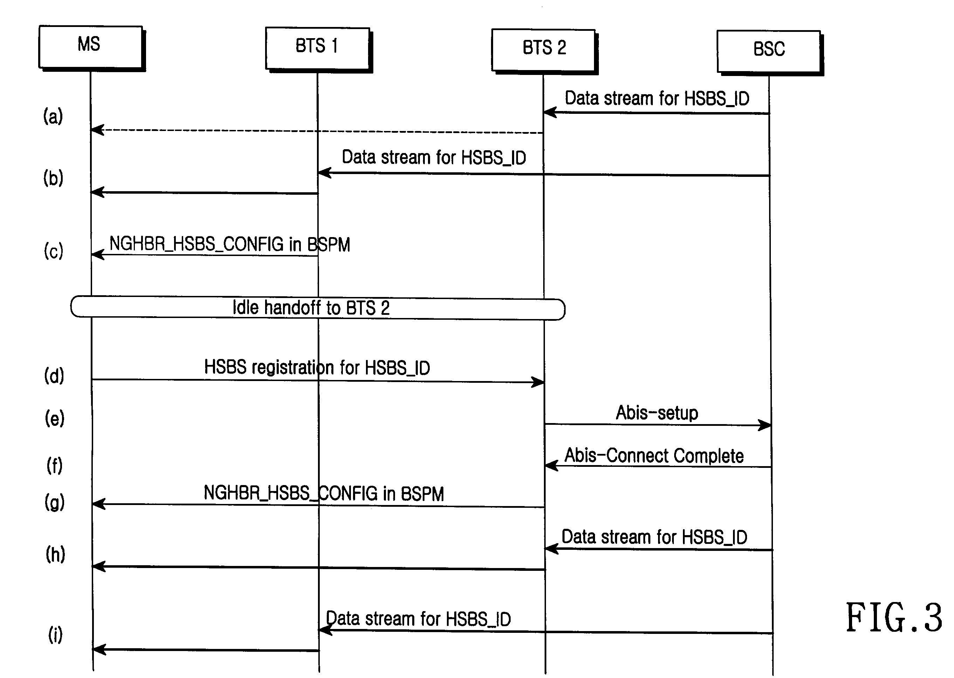

FIG. 3 illustrates a procedure for initiating a broadcast service by a new BTS based on feedback information from a mobile station in a mobile communication system supporting a high-speed broadcast service according to an embodiment of the present invention. Here, the mobile station first receives a broadcast service in a service area of a new BTS. Unlike FIG. 2, FIG. 3 illustrates an operation where a session for a broadcast service can be independently opened and closed for BTSs. For example, FIG. 3 illustrates an operation of BTSs in one BSC area.

Referring to FIG. 3, in steps (a) and (b), a BSC transmits broadcast data received from its upper PCF to its lower BTS1 and BTS2. Here, it will be assumed that a mobile station is in a service area where the BTS1 overlaps with the BTS2. As represented by a dotted line in the step (a), since a physical channel for providing a broadcast service is not currently set up, the BTS2 cannot transmit the broadcast data to the mobile station. However, as represented by a solid line in the step (b), the BTS1 transmits the broadcast data to the mobile station over a physical channel that is previously opened to support the broadcast service.

During the broadcast service, the BTS1 transmits in step (c) an overhead message BSPM to the mobile station over a paging channel. Here, a thin solid line indicates transmission of the BSPM over the paging channel, which is a control channel. The BSPM includes configuration information for neighbor BTSs in an NGHBR_HSBS_CONFIG field along with existing parameters necessary for the broadcast service. If a corresponding neighbor BTS is not currently providing a broadcast service, the NGHBR_HSBS_CONFIG is set to '100' or '101'.

If an idle handoff occurs as the mobile station in an idle state moves toward an area of the BTS2, the mobile station performs HSBS registration on the BTS2 by immediately transmitting an HSBS registration message with HSBS_ID, an index indicating a desired broadcast service, to the BTS2 in step (d). This is because the mobile station has determined that although the BTS2 does not currently provide a broadcast service, it can initiate the broadcast service, i.e., has determined that NGHBR_HSBS_CONFIG is set to '100' or '101'.

In step (e), upon receiving the HSBS registration message, the BTS2 transmits an Abis-Setup message to the BSC through an Abis interface, an interface between the BSC and the BTS. In step (f), the BSC transmits an Abis-Connect_Complete message to the BTS2 in reply to the Abis-Setup message, in order to indicate that a resource for transmitting the broadcast data to the BTS2 is assigned. In step (g), the BTS2 newly updates a physical channel for a broadcast service, opens a broadcast service session, and transmits a new BSPM to the mobile station. Here, an NOHBR_HSBS_CONFIG field for the BTS2 in the new BSPM is set to a value indicating that the BTS2 is currently providing the broadcast service. Then, in steps (h) and (i), the BTS2 and the BTS1 can provide the same broadcast service to the mobile station. In this manner, the mobile station can be provided with a broadcast service even from the BTS2.

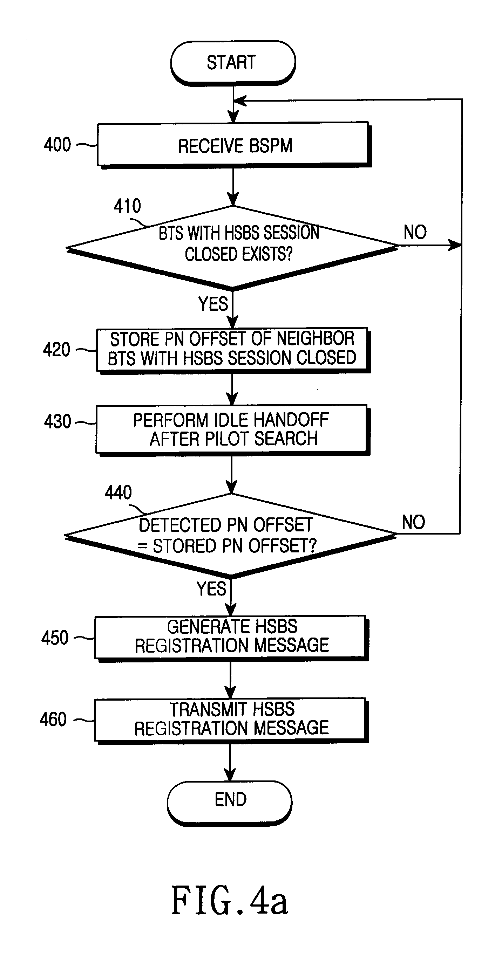

FIG. 4a is a flowchart illustrating a procedure for attempting broadcast service registration to a new BTS during an idle handoff by a mobile station upon receiving neighbor configuration information for a high-speed broadcast service according to an embodiment of the present invention. Referring to FIG. 4a, in step 400, the mobile station receives BSPM from a service BTS that is currently providing a broadcast service at its frequency, and analyzes neighbor configuration information for a broadcast service through the received BSPM. In step 410, the mobile station determines whether there exists any neighbor BTS, from which a received BSPM has an NGHBR_HSBS_CONFIG field set to '100' or '101', i.e., determines whether there is any neighbor BTS, of which a broadcast service session is not opened. If there is at least one BTS for which the NGHBR_HSBS_CONFIG field set to '100' or '101', the mobile station stores in step 420 information on the BTS (especially PN (Pseudo Noise) offset), and searches in step 430 a pilot signal having a new PN offset. If there is no neighbor BTS for which the NGHBR_HSBS_CONFIG field is set to '100' or '101' in step 410, the mobile station returns to step 400 to continuously receive BSPM.

If a pilot signal having a new PN offset is detected, i.e., if an idle handoff occurs, the mobile station determines in step 440 whether the detected PN offset is identical to the stored PN offset. If they are not identical to each other, the mobile station returns to step 400 to continuously receive BSPM. Otherwise, if the detected PN offset is identical to the stored PN offset, the mobile station generates an HSBS registration message for requesting initiation of a broadcast service in step 450, and transmits the HSBS registration message to the BTS that has transmitted the pilot signal having the detected PN offset in step 460.

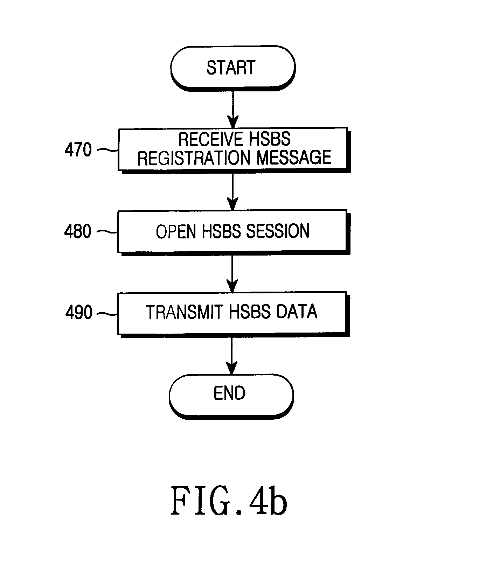

FIG. 4b is a flowchart illustrating a procedure for performing by BTS broadcast service registration attempted by the mobile station according to an embodiment of the present invention. Here, the BTS is not currently providing a broadcast service. Referring to FIG. 4b, the BTS receives in step 470 an HSBS registration message transmitted from the mobile station and recognizes that the mobile station requests initiation of the broadcast service. In step 480, the BTS opens a corresponding broadcast service session and assigns a physical resource for providing the broadcast service. In step 490, the BTS starts providing the broadcast service to the mobile station over the assigned physical resource.

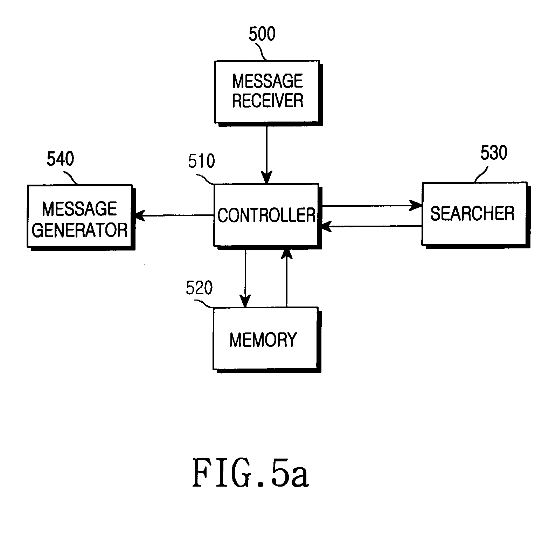

FIG. 5a illustrates a mobile station apparatus according to an embodiment of the present invention. Referring to FIG. 5a, a message receiver 500 despreads and decodes a received signal to restore a received message included in the received signal, and provides the received message to a controller 510. In particular, when the message receiver 500 restores BSPM from the received signal, the controller 510 determines whether there is a neighbor BTS, from which a received BSPM has an NGHBR_HSBS_CONFIG field set to '100' or '101'. If there is a neighbor BTS for which the NGHBR_HSBS_CONFIG field is set to '100' or '101', the controller 510 stores a PN offset of the corresponding neighbor BTS in a memory 520. As stated above, '100' or '101' indicate that although a corresponding neighbor BTS is not currently providing a broadcast service, the mobile station can request initiation of the broadcast service.

A searcher 530 acquires a PN offset by searching a pilot signal from a neighbor BTS, and provides the acquired PN offset to the controller 510. The controller 510 then determines whether the PN offset acquired by the searcher 530 is identical to the PN offset stored in the memory 520. If the PN offset acquired by the searcher 530 is identical to the PN offset stored in the memory 520, the controller 510 orders a message generator 540 to generate an HSBS registration message. The message generator 540 then generates an HSBS registration message and transmits the generated HSBS registration message to BTS corresponding to the PN offset. Here, the HSBS registration message is a message for requesting initiation of a broadcast service, and upon receiving the HSBS registration message, the BTS assigns a physical resource for the broadcast service and starts transmitting broadcast data to the mobile station over the assigned physical resource.

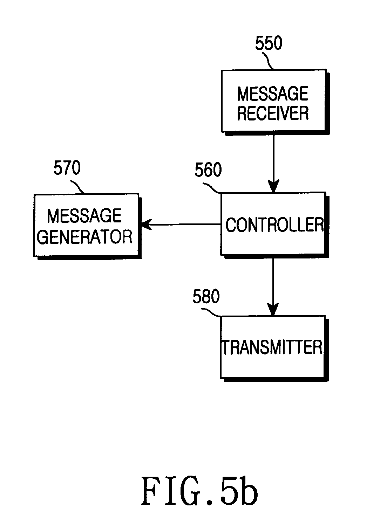

FIG. 5b illustrates a BTS apparatus according to an embodiment of the present invention. Here, the BTS is not currently providing a broadcast service. Referring to FIG. 5b, a message receiver 550 despreads and decodes a received signal to restore a received message included in the received signal, and provides the received message to a controller 560. In particular, when the message receiver 550 restores an HSBS registration message from the received signal, the controller 560 recognizes that a broadcast service start request is received from a mobile station, opens a session for a broadcast service, assigns a physical channel, and transmits to a message generator 570 a BSPM generation order including overhead information for the broadcast service. The message generator 570 then sets an NGHBR_HSBS_CONFIG field for neighbor BTSs in the BSPM to '010' or '011' according to whether the neighbor BTSs provide the broadcast service, and transmits the BSPM to the mobile station. Thereafter, a transmitter 580 broadcasts broadcast data received from its upper system over the assigned physical channel.

Above, the present invention has been described with reference to an embodiment wherein a mobile station transmits a broadcast service start request to a BSC or a BTS that the mobile station enters due to an idle handoff. However, in another embodiment described herein below, a mobile station transmits a broadcast service start request to a neighbor BSC or a neighbor BTS that the mobile station has not yet entered through a service BSC or a service BTS.

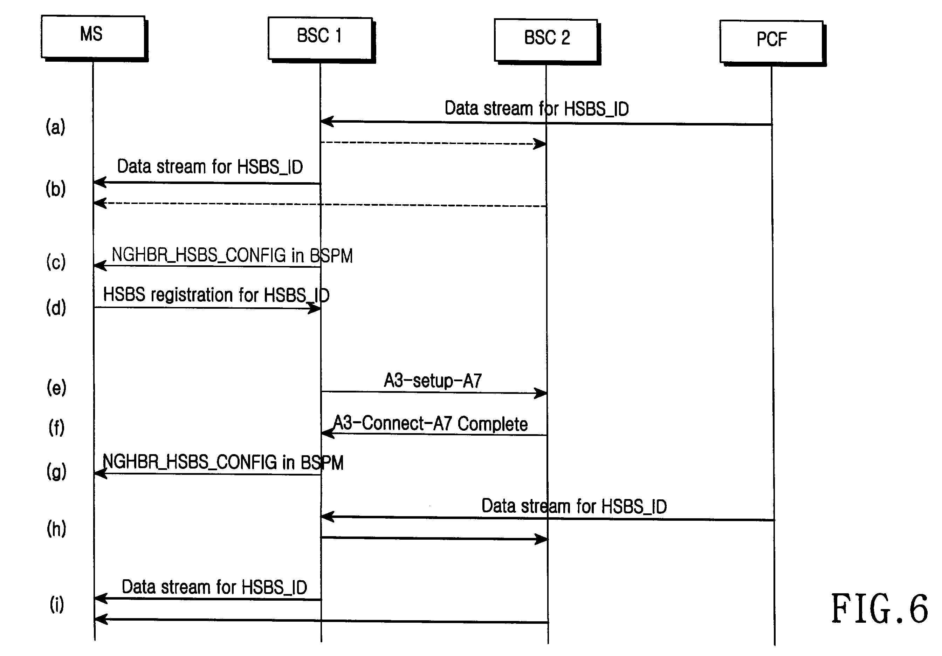

FIG. 6 illustrates a procedure for initiating a broadcast service by a neighbor BSC based on feedback information from a mobile station in a mobile communication system supporting a high-speed broadcast service according to an embodiment of the present invention. Unlike FIG. 2, FIG. 6 illustrates a procedure for requesting by the mobile station initiation of a broadcast service session of another neighbor BSC, other than BSC1, while the mobile station is first provided with a broadcast service from the BSC1. Although a description of the present invention will be made with reference to where BSC1 serves as an anchor BSC, the invention can be applied to other cases as well.

In step (a), a PCF transmits broadcast data received from its upper PDSN to the BSC1, an anchor BSC and attempts to transmit the broadcast data to another BSC (i.e., BSC2). However, the BSC2 cannot receive the broadcast data, since a session of a broadcast service is not opened. In step (b), the BSC1 broadcasts the broadcast data received from the PCF through its lower BTSs, and the BSC2 cannot even broadcast the broadcast data since the BSC2 couldn't receive the broadcast data in the step (a).. In FIG. 6, a dotted line indicates that corresponding transmission cannot be performed.

In step (c), the BSC1 transmits an overhead message BSPM to a mobile station (MS) currently receiving a broadcast service in a corresponding service area over a paging channel by its lower BTSs. Here, a thick solid line represents transmission of broadcast data, and a thin solid line indicates transmission of the BSPM over a paging channel, a control channel. The BSPM includes configuration information for neighbor BTSs in the NGHBR_HSBS_CONFIG field along with parameters necessary for the broadcast service. If there is a neighbor BTS, from which a received BSPM has an NGHBR_HSBS_CONFIG field set to '100' or '101', then the mobile station immediately transmits in step (d) an HSBS registration message to the BSC1. Here, the HSBS registration message includes information for requesting neighbor BSCs of the BSC1 to initiate a broadcast service.

In step (e), upon receiving the HSBS registration message, the BSC1 transmits an A3-Setup-A7 message to a neighbor BSC, i.e., the BSC2, in order to inform that the mobile station requests initiation of a broadcast service. In step (f), the BSC2 transmits an A3-Connect-A7 Complete message to the BSC1 in response to the A3-Setup-A7 message. If connection is made between the BSC1 and the BSC2 in steps (e) and (f), then the BSC2 receives session information for a broadcast service from the BSC1 through the connection, and opens a broadcast service session after checking its wire/wireless resource. In step (g), the BSC1 transmits a new BSPM to the mobile station. Here, an NGHBR_HSBS_CONFIG field for the BSC2 in the new BSPM is updated to a value indicating that the BSC2 is providing a broadcast service.

In step (h), the BSC1 transmits the broadcast data received from the PCF to the BSC2. In step (i), the BSC1 and the BSC2 transmit the same broadcast data to the mobile station. In this way, the mobile station can be provided with the broadcast service even in a service area of a neighbor BSC, i.e., the BSC2.

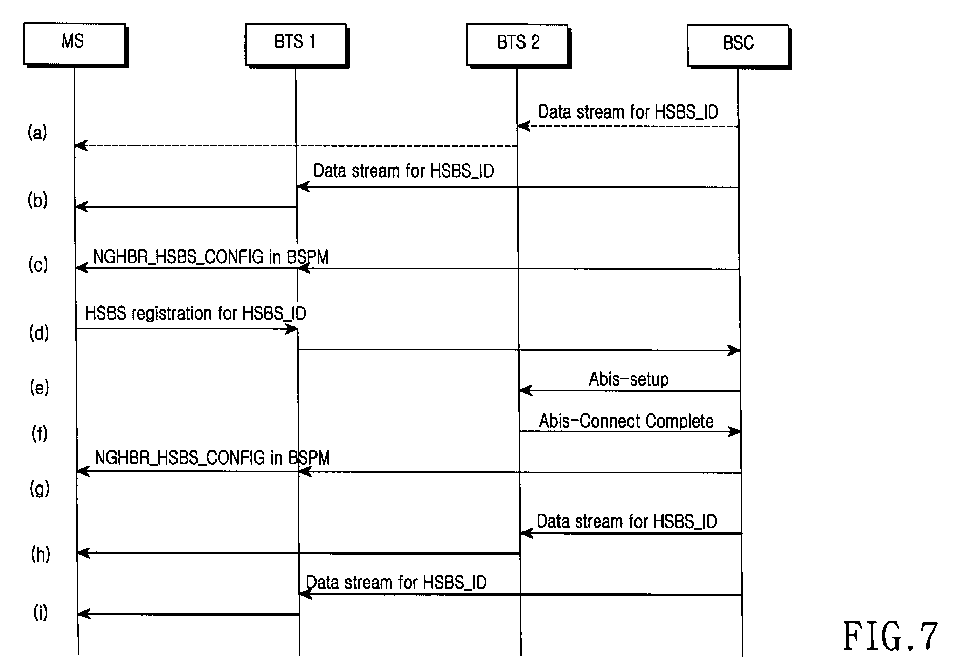

FIG. 7 illustrates a procedure for initiating a broadcast service by a neighbor BTS based on feedback information from a mobile station in a mobile communication system supporting a high-speed broadcast service according to an embodiment of the present invention. Unlike FIG. 6, FIG. 7 illustrates an operation where a session for a broadcast service can be separately opened and closed for BTSs. For example, FIG. 7 illustrates an operation of BTSs controlled by one BSC.

Referring to FIG. 7, in steps (a) and (b), a BSC transmits broadcast data received from its upper PCF to its lower BTS1 and BTS2. In the step (a), since the BTS2 does not support a physical channel to the BSC for a broadcast service, the BTS2 cannot receive the broadcast data, so it cannot transmit broadcast data to a mobile station. However, in the step (b), the BTS1 transmits the broadcast data received from the BSC to the mobile station.

In step (c), the BTS1 transmits an overhead message BSPM to the mobile station over a paging channel. The BSPM, as stated above, includes configuration information for neighbor BTSs in an NGHBR_HSBS_CONFIG field along with overhead information necessary for the broadcast service. In step (d), if an NGHBR_HSBS_CONFIG field for a particular BTS in the BSPM is set to '100' or '101', then the mobile station immediately transmits an HSBS registration message to the BTS1 in order to request initiation of a broadcast service. Here, the HSBS registration message includes information for requesting neighbor BTSs of the BTS 1 to initiate a broadcast service. Upon receiving the HSBS registration message, the BTS1 transmits the received HSBS registration message to the BSC.

In step (e), upon receiving tahe HSBS registration message, the BSC transmits an Abis-Setup message to the BTS2, a neighbor BTS of the BTS1, in order to open a physical channel for a broadcast scrvice. In step (f), the BTS2 transmits an Abis-Connect_Complete message to the BSC in reply to the Abis-Setup message. In the steps (e) and (f), a channel for providing broadcast data from the BSC to the BTS2 is formed.

In step (g), the mobile station receives, from the BTS1, BSPM with an NGHBR_HSBS_CONFIG field updated for a broadcast service. Here, an NGHBR_HSBS_CONFIG field for the BTS2 is set to a value indicating that the BTS2 is currently providing a broadcast service. In step (h), the BTS2, having set up a physical channel newly updated for a broadcast service, transmits the broadcast data provided from the BSC to the mobile station. In the same way, in step (i), the BTS1 transmits the broadcast data provided from the BSC to the mobile station. As a result, the mobile station can be provided with a broadcast service even in a service area of the BTS2, a neighbor BTS.

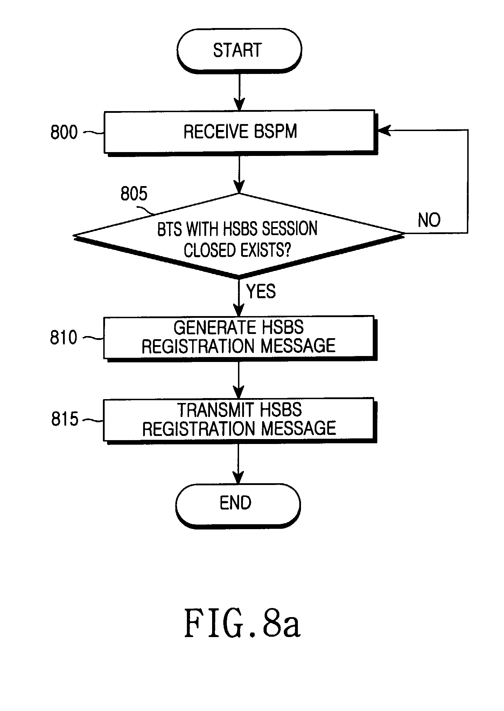

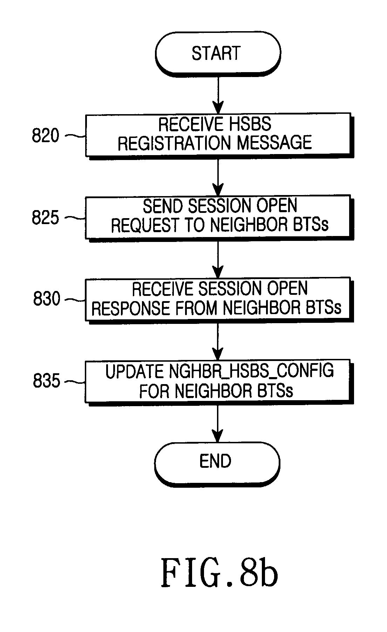

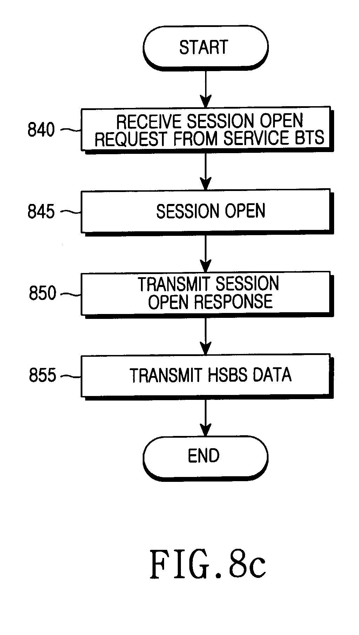

Now, an operation of a unit system based on the procedures of FIGs. 6 and 7 will be described with reference to FIGs. 8a to 8c. Specifically, FIG. 8a illustrates a procedure performed by a mobile station, FIG. 8b illustrates a procedure performed by an initial BTS (or service BTS), and FIG. 8c illustrates a procedure performed by a neighbor BTS.

FIG. 8a is a flowchart illustrating a procedure for attempting HSBS registration to a service BTS in order to initiate a broadcast service of neighbor BTSs by a mobile station upon receiving configuration information for a high-speed broadcast service through BSPM according to another embodiment of the present invention. Here, the "service BTS" indicates a BTS from which the mobile station is currently being provided with a broadcast service. If a corresponding broadcast service is available for a particular BTS even though a soft handoff to the BTS is not possible, HSBS registration can be attempted in order to minimize a broadcast suspension time of the mobile station.

Referring to FIG. 8a, in step 800, the mobile station receives a BSPM (Broadcast Service Parameter Message) from the service BTS, and determines in step 805 whether there is a neighbor BTS, from which a received BSPM has an NGHBR_HSBS_CONFIG field set to '100' or '101'. That is, the mobile station determines whether there is a neighbor BTS, to which a broadcast service is possible but for which a broadcast service session is not opened. If there is no neighbor BTS for which an NGHBR_HSBS_CONFIG field is set to '100' or '101', the mobile station returns to step 800 to continuously receive BSPM. However, if there is a neighbor BTS for which an NGHBR_HSBS_CONFIG field is set to '100' or '101', the mobile station proceeds to step 810. The mobile station generates in step 810 an HSBS registration message for requesting neighbor BTSs to initiate a broadcast service, and transmits in step 815 the generated HSBS registration message to the service BTS. Here, the HSBS registration message includes information for requesting initiation of a broadcast service by the neighbor BTSs.

FIG. 8b is a flowchart illustrating a procedure for processing the HSBS registration message received from the mobile station by a service BTS according to another embodiment of the present invention. Referring to FIG, 8b, in step 820, the service BTS receives the HSBS registration message transmitted by the mobile station, and recognizes that the mobile station requests initiation of a broadcast service by the neighbor BTSs. In step 825, the service BTS notifies the neighbor BTSs of HSBS registration by the mobile station to request the neighbor BTSs to open a broadcast service session. Thereafter, the service BTS receives in step 830 a session open response from the neighbor BTSs, and updates in step 835 NGHBR_HSBS_CONFIG information for the neighbor BTSs to a value indicating that the neighbor BTSs are providing a broadcast service, and then transmits the BSPM with the updated information to the mobile station.

FIG. 8c is a flowchart illustrating a procedure for initiating a broadcast service by a neighbor BTS upon receiving a session open request from a service BTS according to another embodiment of the present invention. Referring to FIG. 8c, upon receiving a session open request from the service BTS in step 840, the neighbor BTS opens in step 845 a session for supporting a corresponding broadcast service and assigns a physical resource for providing the broadcast service. In step 850, the neighbor BTS transmits a session open response to the service BTS in reply to the session open request. Thereafter, in step 855, the neighbor BTS transmits to the mobile station the broadcast data provided over the assigned physical resource.

As described above, the present invention independently controls transmission of a broadcast service data stream by base stations (BSCs or BTSs) based on feedback information from a mobile station, thereby minimizing a waste of wire/wireless resources. In addition, the mobile station transmits a broadcast service request to a base station that has not initiated a broadcast service, based on NGHBR_HSBS_CONFIG field information in a broadcast service parameter message (BSPM), so that the corresponding base station can provide the broadcast service to the mobile station. In this manner, the present invention separately controls a transmission point of broadcast data by base stations during a broadcast service, contributing to efficient utilization of base station resources.

While the invention has been shown and described with reference to a certain preferred embodiment thereof, it will be understood by those skilled in the art that various changes in form and details may be made therein without departing from the spirit and scope of the invention as defined by the appended claims.

## Claims

1. A method for requesting a neighbor base station of a service base station to initiate a broadcast service by a mobile station during the broadcast service from the service base station in a mobile communication system supporting the broadcast service, the method comprising the steps of:
receiving configuration information for the neighbor base station from the service base station, the configuration information indicating whether a handoff from the service base station to the neighbor base station is possible and whether the neighbor base station is providing the broadcast service; and
requesting the neighbor base station to initiate the broadcast service based on the configuration information after the handoff to the neighbor base station.

2. The method of claim 1, wherein the requesting step comprises the steps of:
performing the handoff to a new base station during the broadcast service from the service base station;
if the new base station is the neighbor base station of the service base station, determining whether the neighbor base station is providing the broadcast service based on the configuration information; and
if the neighbor base station is not providing the broadcast service, requesting the neighbor base station to initiate the broadcast service.

3. The method of claim 2, wherein the handoff is a handoff in an idle state.

4. The method of claim 1, wherein the service base station and the neighbor base station each include a base station controller (BSC).

5. The method of claim 1, wherein the service base station and the neighbor base station each include a base transceiver subsystem (BTS).

6. A method for initiating a broadcast service at a request of a mobile station by a base station not providing the broadcast service in a mobile communication system supporting the broadcast service, the method comprising the steps of:
receiving a message for requesting initiation of the broadcast service from the mobile station that has entered a service area of the base station due to a handoff;
opening a session for providing the broadcast service and assigning a physical channel in response to the requesting message; and
broadcasting broadcast data for the broadcast service over the assigned physical channel.

7. The method of claim 6, wherein the base station transmits configuration information to mobile stations in a corresponding service area over a control channel, the configuration information indicating whether a handoff from the base station to neighbor base stations is possible during the broadcast service and whether the neighbor base stations are providing the broadcast service.

8. The method of claim 6, wherein the handoff is a handoff in an idle state.

9. The method of claim 6, wherein the base station includes a base station controller (BSC).

10. The method of claim 6, wherein the base station includes a base transceiver subsystem (BTS).

11. An apparatus for requesting a neighbor base station of a service base station to initiate a broadcast service by a mobile station during the broadcast service from the service base station in a mobile communication system supporting the broadcast service, the apparatus comprising:
a message receiver for receiving from the service base station a first message including configuration information for neighbor base stations of the service base station, the configuration information indicating whether a handoff from the service base station to the neighbor base station is possible and whether the neighbor base station is providing the broadcast service;
a controller for extracting a PN (Pseudo Noise) offset of at least one neighbor base station not providing the broadcast service based on the configuration information;
a memory for storing the extracted PN offset;
a searcher for searching a pilot signal from a new base station and determining a PN offset of the searched pilot signal; and
a message generator for generating a second message requesting the new base station to initiate the broadcast service, if the PN offset determined by the searcher is identical to the PN offset stored in the memory.

12. The apparatus of claim 11, wherein the first message is a BSPM (Broadcast Service Parameter Message).

13. The apparatus of claim 11, wherein the second message is a HSBS (High Speed Broadcast Service) registration message.

14. The apparatus of claim 11, wherein the service base station and the neighbor base station each include a base station controller (BSC).

15. The apparatus of claim 11, wherein the service base station and the neighbor base station each include a base transceiver subsystem (BTS).

16. An apparatus for initiating a broadcast service at a request of a mobile station by a base station not providing the broadcast service in a mobile communication system supporting the broadcast service, the apparatus comprising:
a message receiver for receiving a first message requesting initiation of the broadcast service from the mobile station that has entered a service area of the base station due to a handoff;
a controller for opening a session providing the broadcast service and assigning a physical channel in response to the first message; and
a transmitter for broadcasting broadcast data for the broadcast service over the assigned physical channel.

17. The apparatus of claim 14, wherein the first message is a HSBS (High Speed Broadcast Service) registration message.

18. The apparatus of claim 16, further comprising a message generator for generating a second message including configuration information indicating whether a handoff from the base station to neighbor base stations is possible during the broadcast service and whether the neighbor base stations are providing the broadcast service, and transmitting the second message to mobile stations in a corresponding service area over a control channel.

19. The apparatus of claim 18, wherein the second message a BSPM (Broadcast Service Parameter Message).

20. The apparatus of claim 16, wherein the base station includes a base station controller (BSC).

21. The apparatus of claim 16, wherein the base station includes a base transceiver subsystem (BTS).

22. A method for requesting neighbor base stations of a service base station to initiate a broadcast service by a mobile station during the broadcast service from the service base station in a mobile communication system supporting the broadcast service, the method comprising the steps of:
receiving configuration information for the neighbor base stations from the service base station, the configuration information indicating whether a handoff from the service base station to the neighbor base stations is possible and whether the neighbor base stations are providing the broadcast service;
determining whether there is a base station not providing the broadcast service among the neighbor base stations, based on the configuration information; and
if there is the base station not providing the broadcast service among the neighbor base stations, requesting the service base station to initiate the broadcast service of the neighbor base station.

23. The method of claim 22, wherein the service base station and the neighbor base stations each include a base station controller (BSC).

24. The method of claim 22, wherein the service base station and the neighbor base stations each include a base transceiver subsystem (BTS).

25. A method for requesting neighbor base stations to initiate a broadcast service at a request of a mobile station by a service base station providing the broadcast service in a mobile communication system supporting the broadcast service, the method comprising the steps of:
receiving from the mobile station a message for requesting the neighbor base stations to initiate the broadcast service;
requesting the neighbor base stations to open a session for the broadcast service in response to the requesting message; and
receiving a response to the session open request from the neighbor base stations.

26. The method of claim 25, wherein the service base station transmits configuration information to mobile stations in a corresponding service area over a control channel, the configuration information indicating whether a handoff from the base station to the neighbor base stations is possible during the broadcast service and whether the neighbor base stations are providing the broadcast service.

27. The method of claim 25, wherein the service base station and the neighbor base stations each include a base station controller (BSC).

28. The method of claim 25, wherein the service base station and the neighbor base stations each include a base transceiver subsystem (BTS).

29. A method for initiating a broadcast service at a request of a service base station providing the broadcast service to a mobile station by a base station not providing the broadcast service in a mobile communication system supporting the broadcast service, the method comprising the steps of:
receiving a message for requesting opening of a session for the broadcast service from the service base station;
in response to the requesting message, opening a session for providing the broadcast service, assigning a physical channel, and transmitting a response to the message to the service base station; and
broadcasting broadcast data for the broadcast service over the assigned physical channel.

30. The method of claim 29, wherein the base station transmits configuration information to mobile stations in a corresponding service area over a control channel, the configuration information indicating whether a handoff from the base station to neighbor base stations is possible during the broadcast service and whether the neighbor base stations are providing the broadcast service.

31. The method of claim 29, wherein the base stations each include a base station controller (BSC).

32. The method of claim 29, wherein the base stations each include a base transceiver subsystem (BTS).
